(19) **Europäisches Patentamt**

**European Patent Office**

**Office européen des brevets**

(11) **EP 1 032 765 B1**

(12) **EUROPÄISCHE PATENTSCHRIFT**

(45) Veröffentlichungstag und Bekanntmachung des Hinweises auf die Patenterteilung:
**08.01.2003  Patentblatt 2003/02**

(21) Anmeldenummer: **98962343.4**

(22) Anmeldetag: **16.11.1998**

(51) Int Cl.⁷: **F04D 29/12**, F16J 15/34

(86) Internationale Anmeldenummer:
**PCT/EP98/07315**

(87) Internationale Veröffentlichungsnummer:
**WO 99/025981 (27.05.1999 Gazette 1999/21)**

(54) **KREISELPUMPE MIT GLEITRINGDICHTUNG**

CENTRIFUGAL PUMP WITH A FLOATING RING SEAL

POMPE CENTRIFUGE A BAGUE D'ETANCHEITE GLISSANTE

(84) Benannte Vertragsstaaten:
**AT BE CH DE FR GB IT LI NL SE**

(30) Priorität: **17.11.1997  DE 19750882
28.07.1998  DE 19834011**

(43) Veröffentlichungstag der Anmeldung:
**06.09.2000  Patentblatt 2000/36**

(73) Patentinhaber: **Allweiler AG
D-78315 Radolfzell (DE)**

(72) Erfinder: **AENIS, Jürgen
D-78315 Radolfzell (DE)**

(74) Vertreter: **Hiebsch, Gerhard F., Dipl.-Ing. et al
Patentanwälte,
Dipl.-Ing. G.F. Hiebsch,
Dipl.-Ing. N. Behrmann M.B.A. (NY),
Heinrich-Weber-Platz 1
78224 Singen (DE)**

(56) Entgegenhaltungen:
GB-A- 1 174 767          US-A- 4 979 875
US-A- 5 336 048

**Beschreibung**

Die Erfindung betrifft eine Kreiselpumpe mit in einem Dichtungsraum für geförderte Flüssigkeit vorgesehener Gleitringdichtung für eine Pumpenwelle sowie im Dichtungsraum zwischen dessen Außenwandung und der Gleitringdichtung angeordneten, längsschnittlich etwa parallel zur Pumpenwelle verlaufenden stegartigen Flächenstücken, wobei im Kopfbereich des Dichtungsraumes wenigstens eine verschließbare Entlüftungsöffnung angeordnet ist.

Eine solche Kreiselpumpe beschreibt beispielhaft ein Prospekt der Anmelderin vom April 1986 zur sog. Baureihe NTT an einem Schnittbild für einstufige Baugrößen; dort sind die Flächenstücke am Übergang einer Seitenfläche in die Umfangswand des Dichtungsraumes radial angeformt. Mit ihm soll eine Beruhigung der um die Pumpenwelle geführten Flüssigkeit ermöglicht werden.

Die EP 0 327 549 B1 zeigt eine die Gleitringdichtung bzw. die Pumpenwelle in Abstand umgebende Ringwand mit von ihr abstehenden Radialrippen, welche nahe an die Umfangswand des Dichtungsraumes reichen. Auch wird angedeutet, daß von der Umfangswand radiale Rippen zur Pumpenwelle hin gerichtet sein können.

In Kenntnis dieses Standes der Technik hat sich der Erfinder das Ziel gesetzt, die Einrichtungen zur Rotationsberuhigung und zur Gasentnahme zu verbessern und dabei die Herstellung solcher Kreiselpumpen zu vereinfachen.

Zur Lösung dieser Aufgabe führt die Lehre nach dem unabhängigen Patentanspruch; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß verläuft an der Umfangs- oder Außenwand des Dichtungsraumes beidseits der Entlüftungsöffnung jeweils ein schaufelartiges Flächenstück; diese beiden -- querschnittlich zueinander geneigten -- Flächenstücke begrenzen in Abstand zu jener Umfangswand zwischen sich einen Vorraum der Entlüftungsbohrung mit einem zur Pumpenwelle etwa parallelen Spalt. Durch diesen tritt Flüssigkeit radial in den erwähnten Vorraum, in dem sie beruhigt verweilt.

Als günstig hat es sich erwiesen, die -- vorteilhafterweise aus metallischem Werkstoff geformten -- Flächenstücke an der Außen- bzw. Umfangswand oder einer der Stirn- bzw. Radialwände des Dichtungsraumes festzulegen, bevorzugt an der der Saugseite fernen Radialwand; von dieser ragen sie dann nach einem weiteren Merkmal der Erfindung in Abstand zur Umfangs- oder Außenwand -- unter Bildung eines Spaltes -ab. Zudem soll auch ihre etwa radiale freie Schaufelkante mit der anderen Radialwand einen Radialspalt begrenzen.

Der Firstspalt an der Umfangswand erlaubt es, daß sich im Vorraum firstnahe ein Kopfraum oberhalb des Flüssigkeitsspiegels bildet, der beidseits über die schaufelartigen Vorraumbegrenzungen hinausgreift.

Bevorzugt wird auch, daß die beiden den zur Pumpenwelle hin sich querschnittlich verjüngenden Vorraum für die Entlüftungsöffnung begrenzenden Flächenstücke miteinander einen Querschnittswinkel bilden, der zwischen 70° und 90° mißt, bevorzugt aber etwa 80°.

Nach einem anderen Merkmal der Erfindung erzeugt zudem eine das Flächenstück verlängernde Ebene mit der die Mittelachse der Entlüftungsöffnung rechtwinkelig querenden Durchmessergeraden -- für einen Radius der Umfangswandung von etwa 65 mm -- einen Winkel von etwa 30° bis 60°, bevorzugt aber etwa 50°. Als günstig hat es sich auch erwiesen, die Flächenstücke so anzuordnen, daß eine sie verlängernde Ebene mit der die Mittelachse der Entlüftungsöffnung rechtwinkelig querenden Durchmessergeraden einen Winkel von 30° bis 60°, bevorzugt etwa 50°, begrenzt. Diese Durchmessergerade wird von einem Radius der Umfangswandung von etwa 65 mm bestimmt. Diese Maßgaben begünstigen die Querschnittsform des Vorraumes.

Erfindungsgemäß sind die Querschnittslängen beider Flächenstücke unterschiedlich und können sich zueinander verhalten wie 3 : 2 bis 3 : 2,5. Dabei soll die Breite des erwähnten Einzugspaltes etwa einem Sechstel der Querschnittshöhe des längeren Flächenstücks entsprechen.

Von Bedeutung ist auch, daß das querschnittslängere Flächenstück in Drehrichtung der Pumpenwelle dem querschnittskürzeren Flächenstück vorgeordnet ist und dadurch seine Fußkante als Abrißkante dienen kann; das querschnittslängere Flächenstück soll in eine den Querschnitt des anderen Flächenstücks verlängernde Ebene hineinragen.

Im Rahmen der Erfindung liegt es, daß der Querschnitt des erwähnten Vorraumes gegenüber dem Querschnitt des Dichtungsraumes verhältnismäßig klein ist, beide bevorzugt in einem Verhältnis von zehn zu eins stehen; letzteres führt zu besonders günstigen Ergebnissen. Der über der Flüssigkeit entstehende Raum nimmt auch bei höheren Geschwindigkeiten der Pumpenwelle die Luft problemlos auf.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1:   den Längsschnitt durch eine Kreiselpumpe;

Fig. 2:   ein vergrößertes Detail aus Fig. 1 im Längsschnitt gemäß Linie II-II in Fig. 3;

Fig. 3:    den Schnitt durch Fig. 2 nach deren Linie II-II;

Fig. 4:    einen vergrößerten Ausschnitt aus Fig. 3.

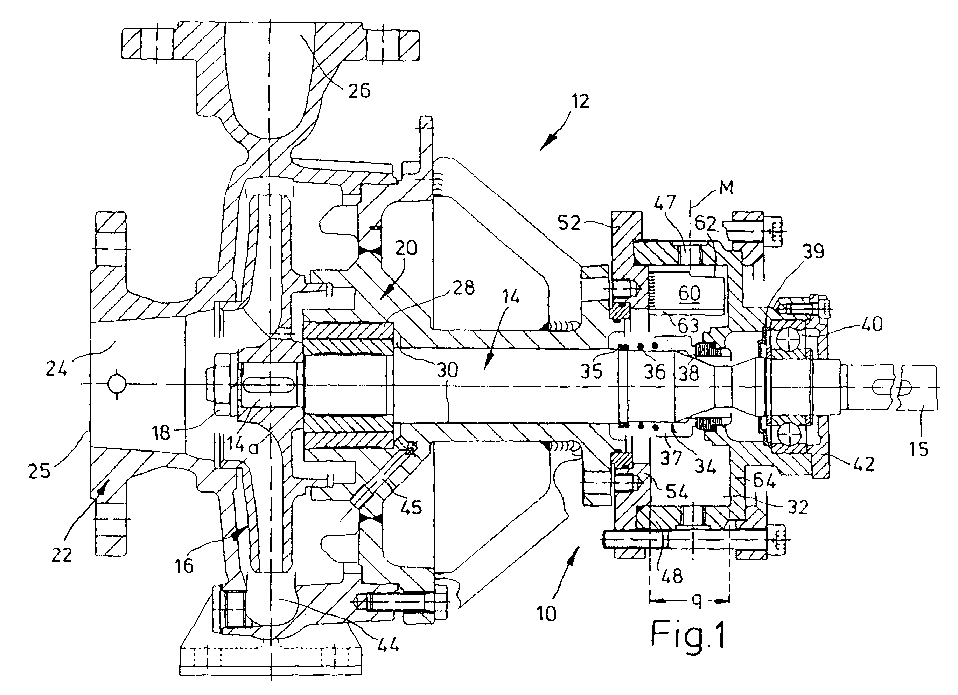

In einem Lagerträgergehäuse 10 einer Kreiselpumpe 12 sitzt gemäß Fig. 1 auf dem vorderen gestuften Ende $14_a$ einer Pumpenwelle 14 vom Durchmesser d ein Laufrad 16 und wird von einer Mutter 18 gehalten. Dieses Laufrad 16 dreht sich in einem mit dem Lagerträgergehäuse 10 -- unter Zwischenschaltung von Gehäusedeckel 20 und nicht kenntlich gemachten Dichtungen -- verschraubten Spiralgehäuse 22, das einen Saugraum 24 enthält und dessen Einlaß mit 25 sowie dessen Auslaß mit 26 bezeichnet sind. Nahe dem Laufrad 16 befindet sich im Gehäusedeckel 20 ein vorderes Gleitlager 28.

Eine die Pumpenwelle 14 aufnehmende zylindrische Zentralausnehmung 30 des Gehäusedeckels 20 mündet in einen Dichtungsraum 32, in dem eine hintere Axialgleitringdichtung 34 zu erkennen ist. Deren von einer -- sich gegen einen auf die Pumpenwelle 14 geschobenen Ring 35 oder eine Ringstufe abstützenden -- Schraubenfeder 36 belasteter rotierender Gleitring 37 bildet mit einem stationären Gegenring 38 einen Dichtungsspalt. Die Gleitlagerkomponenten bestehen in dem gewählten Ausführungsbeispiel bevorzugt aus Siliziumkarbid.

Zwischen der Gleitringdichtung 34 und dem Wellenende 15 umgibt die Pumpenwelle 14 -- nach einem Dichtungsteller 39 gestuften Querschnittes -- ein Wälzlager 40, das von einem Lagerdeckel 42 überspannt ist.

Der zur Funktion der hydrodynamischen Gleitlager 28, 34 notwendige Flüssigkeitsstrom dient gleichzeitig zum Abtransport der durch Lagerreibung hervorgerufenen Wärme. Der Kühl-/Schmierstrom wird aus einem Seitenraum 44 für das Laufrad 16 entnommen, durchströmt das vordere Gleitlager 28 und gelangt dann zur Zentralausnehmung 30, die zudem durch einen Seitenkanal 45 mit jenem Seitenraum 44 verbunden ist.

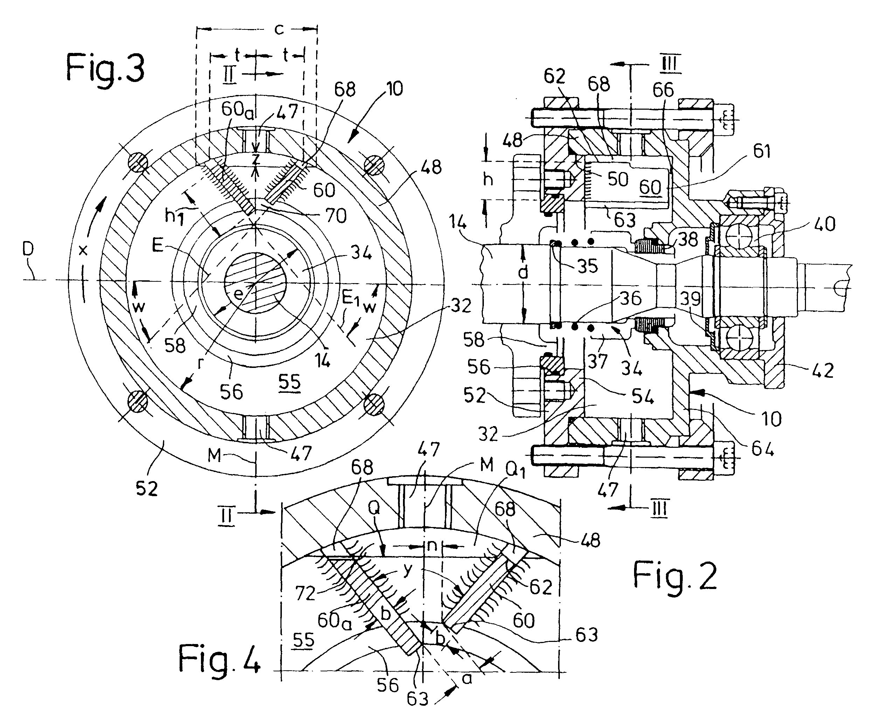

Die Zusammenschau der Fig. 2, 3 macht deutlich, daß die Gleitringdichtung 34 des Durchmessers e von hier 54 mm vom Dichtungsraum 32 umgeben ist, an den Entlüftungsöffnungen oder -bohrungen 47 einer Umfangs- oder Ringwandung 48 münden; die zugehörigen Stopfen sind in der Zeichnung vernachlässigt. Diese Außen- oder Ringwand 48 liegt in der linken Hälfte der Fig. 2 einer Ringschulter 50 einer Radialwand 52 auf, aus der innenseitig ein jene Ringschulter 50 erzeugender Ringwulst 54 herausgeformt ist. An letzteren schlägt ein Zwischenring 56 an, in den anderseits eine Ringrippe 58 des Gehäusedeckels 20 eingreift.

Beidseits der im Zenit von Fig. 2, 3 liegenden Entlüftungsbohrung 47 ragt vom Ringwulst 54 eine an dessen Radialfläche 55 angeschweißte ebene Schaufel 60 bzw. $60_a$ als Flächenstück ab, deren angeschweißte Kante im Abstand t von etwa 22 mm zur Mittelachse M der Entlüftungsbohrung 47 verläuft. Die freie Schaufelkante 61 der Schaufel 60 bildet mit der gegenüberliegenden hinteren Radialwand 64 des Lagergehäuses 10 einen Radialspalt 66 und die Firstkante 62 der Schaufel 60 mit der Umfangs- oder Ringwand 48 einen schmalen Firstspalt 68. Im übrigen ist die Firstkante 62 etwa in der Mittelachse M der Entlüftungsbohrung 47 stufenartig abgesetzt. Sie kann auch -- wie die linke Schaufel $60_a$ in Fig. 4 verdeutlicht -- querschnittlich zur Durchmessergeraden D parallel verlaufen.

Bei einer in der Zeichnung nicht wiedergegebenen Ausführung sind -- statt der an die saugraumnahe Radialfläche 55 angeschweißten Schaufeln 60, $60_a$ -- die Schaufeln 60, $60_a$ mit der hinteren Radialwand einstückig gegossen, so daß sich der erwähnte Radialspalt 66 an jener saugraumseitigen Radialfläche 55 einstellt.

Eine von der Schaufel 60 -- der Querschnittslänge h von etwa 23 mm -- bestimmte Konstruktionsebene E schließt mit der jene Mittelachse M rechtwinkelig kreuzenden Durchmessergeraden D einen Winkel w von etwa 50° ein, so daß die Fußkante 63 der Schaufel 60 zu jener Mittelachse M hin geneigt weist. Die andere Schaufel $60_a$ einer Querschnittslänge $h_1$ von hier 30 mm ist ebenfalls zur Mittelachse M hin geneigt und ihre Konstruktionsebene $E_1$ schließt mit jener Durchmessergeraden D ebenfalls einen Winkel w gleichen Ausmaßes ein. Die Querschnittslänge $h_1$ entspricht weniger als der Hälfte des Radius r von 65 mm für die Ringwandung 48.

Aus dem Radius r und dem Durchmesser e der Gleitringdichtung 34 ergibt sich der Querschnitt des offenen Dichtungsraumes 32 hier mit beispielsweise

$$\pi\, 65^2 - \pi\, \frac{54^2}{4} = 13.273\ mm^2 - 2290\ mm^2 = 10.983\ mm^2.$$

Demgegenüber ist der von den Schaufeln 60, $60_a$ bestimmte Querschnitt der Vorkammer 72 verhältnismäßig klein; er mißt etwa zehn vom Hundert jener Fläche.

Durch die unterschiedlichen Querschnittslängen $h, h_1$ der Flächenstücke oder Schaufeln 60, $60_a$ entsteht zwischen deren Fußkanten 63 der Breite b von etwa 5 mm ein Einzugsspalt 70 einer Breite a von etwa 8 mm sowie einer radialen Maximalbreite n, die hier der Schaufelbreite b entspricht.

Die in Rotationsrichtung x der Pumpenwelle 14 vordere Schaufel $60_a$ ragt endwärts so weit vor, daß sie die Projektion der Fußkante 63 der anderen Schaufel 60 etwas überragt, wie vor allem Fig. 4 verdeutlicht. Mit z sei die Scheitelhöhe der Vorkammer 72 über dem Flüssigkeitsspiegel Q kenntlich gemacht, die hier etwa ein Drittel des Ab-

3

standes t mißt.

Der sich nahezu über die gesamte Breite q des Dichtungsraumes 32 erstreckende Einzugspalt 70 öffnet sich zu einem von ihm weg querschnittlich in einem Winkel y von etwa 80° sich erweiternden Vorraum 72 der Entlüftungsbohrung 46. In diesen Vorraum 72 gelangen Gase aus der im Dichtungsraum 32 vorhandenen Flüssigkeit, die um die Fußkante 63 der querschnittshöheren Schaufel $60_a$ umgelenkt ist. Die in Pfeilrichtung x drehende Pumpenwelle 14 sowie die Gleitringdichtung 34 veranlassen eine Rotation der Flüssigkeit, wobei der Flüssigkeitsbereich an der Ringwandung 48 durch die Schaufeln 60, $60_a$ beruhigt wird. Im Vorraum 72 stellt sich ein mit Q bezeichneter Flüssigkeitsspiegel ein, der einen gasgefüllten Kopfraum $Q_1$ der Basisbreite c begrenzt. Dieser durchgreift -- wie in Fig. 3, 4 verdeutlicht -- die Firstspalte 68 so, daß seine querschnittlich dreiecksartigen Enden in den Dichtraum 32 außerhalb der Schaufeln 60, $60_a$ ragen.

**Patentansprüche**

1. Kreiselpumpe mit in einem Dichtungsraum (32) für geförderte Flüssigkeit vorgesehener Gleitringdichtung (34) für eine Pumpenwelle (14) sowie im Dichtungsraum zwischen dessen Außenwandung (48) und der Gleitringdichtung angeordneten, längsschnittlich etwa parallel zur Pumpenwelle verlaufenden stegartigen Flächenstücken (60, $60_a$), wobei im Kopfbereich des Dichtungsraumes wenigstens eine verschließbare Entlüftungsöffnung (47) angeordnet ist,

   **dadurch gekennzeichnet,**

   **daß** an der Umfangswandung (48) beidseits der verschließbaren Entlüftungsöffnung (47) jeweils ein schaufelartiges Flächenstück (60, $60_a$) verläuft und beide Flächenstücke querschnittlich zueinander geneigt sind sowie in Abstand zur Umfangswandung zwischen sich einen Vorraum (72) mit einem zur Pumpenwelle (14) etwa parallelen Spalt (70) begrenzen.

2. Kreiselpumpe nach Anspruch 1, **dadurch gekennzeichnet, daß** die Flächenstücke (60, $60_a$) an einer Wand (52, 54; 64; 48) des Dichtungsraumes (32) festgelegt sind.

3. Kreiselpumpe nach Anspruch 1 oder 2, **dadurch gekennzeichnet, daß** die schaufelartigen Flächenstücke (60, $60_a$) an der Radialwand (52, 54; 64) festgelegt sind und ihre dazu etwa paralle freie Schaufelkante (61) mit der anderen Radialwand (64; 52, 54) einen Radialspalt (66) begrenzt.

4. Kreiselpumpe nach einem der Ansprüche 1 bis 3, **dadurch gekennzeichnet, daß** die Flächenstücke (60, $60_a$) mit der Umfangswandung (48) des Dichtungsraumes (32) jeweils einen Firstspalt (68) begrenzen.

5. Kreiselpumpe nach Anspruch 4, **dadurch gekennzeichnet, daß** die der Umfangswandung (48) nahe Firstkante (62) des Flächenstücks (60, $60_a$) zumindest einmal unter Vergrößerung der Weite des Firstspaltes (68) zum Radialspalt (66) hin gestuft ist.

6. Kreiselpumpe nach einem der Ansprüche 1 bis 5, **dadurch gekennzeichnet** durch einen Querschnittswinkel (y) des sich zur Pumpenwelle (14) hin querschnittlich verjüngenden Vorraumes (72) von etwa 70° bis 90°, bevorzugt etwa 80°.

7. Kreiselpumpe nach einem der Ansprüche 1 bis 6, **dadurch gekennzeichnet, daß** eine das Flächenstück (60, $60_a$) verlängernde Ebene (E, $E_1$) mit der die Mittelachse (M) der Entlüftungsöffnung (47) rechtwinkelig querenden Durchmessergeraden (D) einen Winkel (w) von 30° bis 60°, bevorzugt etwa 50°, begrenzt.

8. Kreiselpumpe nach Anspruch 7, **dadurch gekennzeichnet, daß** die Durchmessergerade (D) von einem Radius (r) der Umfangswandung (48) von etwa 65 mm bestimmt ist.

9. Kreiselpumpe nach einem der Ansprüche 1 bis 8, **dadurch gekennzeichnet, daß** die Flächenstücke (60, $60_a$) von unterschiedlichen Querschnittslängen (h, $h_1$) sind.

10. Kreiselpumpe nach Anspruch 9, **dadurch gekennzeichnet, daß** sich die Querschnittslänge ($h_1$) eines höheren Flächenstückes ($60_a$) zur Querschnittslänge (h) des niedrigeren Flächenstücks (60) verhält wie etwa 3 : 2 bis 3 : 2,5.

11. Kreiselpumpe nach einem der Ansprüche 1 bis 10, **dadurch gekennzeichnet, daß** die Breite (a) des Einzugspaltes (70) des Vorraumes (72) etwa einem Sechstel der Querschnittslänge ($h_1$) des höheren Flächenstücks oder Werkstoffstreifens ($60_h$) entspricht.

**12.** Kreiselpumpe nach wenigstens einem der Ansprüche 1 bis 11, **dadurch gekennzeichnet, daß** das querschnittslängere Flächenstück ($60_a$) in Drehrichtung (x) der Pumpenwelle (14) dem querschnittskürzeren Flächenstück (60) vorgeordnet ist.

**13.** Kreiselpumpe nach Anspruch 12, **dadurch gekennzeichnet, daß** das querschnittslängere Flächenstück ($60_a$) in eine den Querschnitt des anderen Flächenstücks (60) verlängernde Ebene hineinragt.

**14.** Kreiselpumpe nach wenigstens einem der Ansprüche 1 bis 13, **gekennzeichnet durch** einen Querschnitt des Vorraumes (72), der gegenüber dem Querschnitt des Dichtungsraumes (32) verhältnismäßig klein ist.

**15.** Kreiselpumpe nach Anspruch 14, **gekennzeichnet durch** ein Querschnittsverhältnis des Dichtungsraumes (32) zum Vorraum (72) von etwa 12 : 1 bis 6 : 1, bevorzugt etwa 10 : 1.

## Claims

**1.** Centrifugal pump with a rotary seal (34), provided in a watertight space (32) for conveyed fluid, for a pump shaft (14) and also web-like flat pieces (60, $60_a$) arranged in the watertight space between its outer wall (48) and the rotary seal and running in longitudinal section approximately parallel to the pump shaft, at least one closable ventilation orifice (47) being arranged in the head area of the watertight space,
**characterised in that**
on the circumferential wall (48) a blade-like flat piece (60, $60_a$) runs in each case on both sides of the closable ventilation orifice (47) and both flat pieces are inclined cross-sectionally towards one another and also between them delimit a preliminary space (72) with a gap (70) approximately parallel to the pump shaft (14) at a distance from the circumferential wall (14).

**2.** Centrifugal pump according to claim 1, **characterised in that** the flat pieces (60, $60_a$) are fixed to a wall (52, 54; 64; 48) of the watertight space (32).

**3.** Centrifugal pump according to claim 1 or 2, **characterised in that** the blade-like flat pieces (60, $60_a$) are fixed to the radial wall (52, 54; 64) and their open blade edge (61), approximately parallel to it, delimits a radial gap (66) with the other radial wall (64; 52, 54).

**4.** Centrifugal pump according to one of claims 1 to 3, **characterised in that** the flat pieces (60, $60_a$) in each case delimit a ridge gap (68) with the circumferential wall (48) of the watertight space (32).

**5.** Centrifugal pump according to claim 4, **characterised in that** the edge of the ridge (62) of the flat piece (60, $60_a$) near the circumferential wall (48) is graduated towards the radial gap (66) at least once, enlarging the width of the ridge gap (68).

**6.** Centrifugal pump according to one of claims 1 to 5, **characterised by** a cross-sectional angle (y) of the preliminary space (72), tapering cross-sectionally towards the pump shaft (14), of approximately 70° to 90°, preferably approximately 80°.

**7.** Centrifugal pump according to one of claims 1 to 6, **characterised in that** a plane (E, $E_1$), lengthening the flat piece (60, $60_a$), delimits an angle (w) of 30° to 60°, preferably approximately 50°, with the diameter straight line (D) crossing the central axis (M) of the ventilation orifice (47) at right angles.

**8.** Centrifugal pump according to claim 7, **characterised in that** the diameter straight line (D) is defined by a radius (r) of the circumferential wall (48) of approximately 65 mm.

**9.** Centrifugal pump according to one of claims 1 to 8, **characterised in that** the flat pieces (60, $60_a$) are of different cross-sectional lengths (h, $h_1$).

**10.** Centrifugal pump according to claim 9, **characterised in that** the cross-sectional length ($h_1$) of a higher flat piece

($60_a$) to the cross-sectional length (h) of the lower flat piece (60) is in the ratio of approximately 3 : 2 to 3 : 2.5.

11. Centrifugal pump according to one of claims 1 to 10, **characterised in that** the width (a) of the tapering gap (70) of the preliminary space (72) corresponds to approximately a sixth of the cross-sectional length ($h_1$) of the higher flat piece or strip of material ($60_h$).

12. Centrifugal pump according to at least one of claims 1 to 11, **characterised in that** the flat piece with the longer cross-section ($60_a$) is arranged in front of the flat piece with the shorter cross-section (60) in the direction of rotation (x) of the pump shaft (14).

13. Centrifugal pump according to claim 12, **characterised in that** the flat piece with the longer cross-section ($60_a$) projects into a plane lengthening the cross-section of the other flat piece (60).

14. Centrifugal pump according to at least one of claims 1 to 13, **characterised by** a cross-section of the preliminary space (72) which is relatively small compared with the cross-section of the watertight space (32).

15. Centrifugal pump according to claim 14, **characterised by** a ratio of the cross-section of the watertight space (32) to the preliminary space (72) of approximately 12 : 1 to 6 : 1, preferably approximately 10 : 1.

**Revendications**

1. Pompe centrifuge comprenant, dans un espace d'étanchéité (32), pour fluide extrait, une garniture étanche (34) à anneau glissant pour un arbre de pompe (14), ainsi que des pièces de surface (60, 60a), du genre d'une barrette, s'étendant en coupe longitudinale de façon sensiblement parallèle à l'arbre de pompe et disposées dans l'espace d'étanchéité entre la paroi extérieure (48) de cet espace et la garniture étanche à anneau glissant, au moins une ouverture de purge d'air (47) susceptible d'être obturée étant disposée dans la zone de tête de l'espace d'étanchéité,
   **caractérisée en ce que**,
   sur la paroi périphérique (48), sur chacun des deux côtés de l'ouverture (47) de purge d'air susceptible d'être obturée, s'étend une pièce de surface (60, 60a) en forme d'aubes, et **en ce que** les deux pièces de surface sont inclinées l'une vers l'autre en section transversale et délimitent entre elles, à distance de la paroi périphérique, un pré-espace (72) avec un intervalle (70) sensiblement parallèle à l'arbre de pompe (14).

2. Pompe centrifuge selon la revendication 1, **caractérisée en ce que** les pièces de surface (60, 60a) sont fixées rigidement à une paroi (52, 54; 64; 48) de l'espace d'étanchéité (32).

3. Pompe centrifuge selon la revendication 1 ou 2, **caractérisée en ce que** les pièces de surface (60, 60a) en forme d'aubes sont fixées rigidement à la paroi radiale (52, 54; 64) et leurs arêtes libres (61) d'aube qui en sont sensiblement parallèles, délimitent avec l'autre paroi radiale (64; 52, 54) un intervalle radial (66).

4. Pompe centrifuge selon l'une des revendications 1 à 3, **caractérisée en ce que** les pièces de surface (60, 60a) délimitent chacune avec la paroi périphérique (48) de l'espace d'étanchéité (32) un intervalle de crête (68).

5. Pompe centrifuge selon la revendication 4, **caractérisée en ce que** l'arête de crête (62) de la pièce de surface (60, 60a) à proximité de la paroi périphérique (48) présente au moins un gradin provoquant un agrandissement de la largeur de l'intervalle de crête (68) vers l'intervalle radial (66).

6. Pompe centrifuge selon l'une des revendications 1 à 5, **caractérisée par** un angle (y) en section transversale du pré-espace (72) qui se réduit en section transversale en direction de l'arbre de pompe (14), l'angle (y) étant entre 70° et 90°, de préférence de 80°.

7. Pompe centrifuge selon l'une des revendications 1 à 6, **caractérisée en ce qu'**un plan (E, $E_1$) prolongeant la pièce de surface (60, 60a) délimite avec la droite diamétrale (D) traversant à angle droit l'axe médian (M) de l'ouverture (47) de purge d'air, un angle (w) de 30° à 60°, de préférence d'environ 50°.

8. Pompe centrifuge selon la revendication 7, **caractérisée en ce que** la droite diamétrale (D) est déterminée par un rayon (r) d'environ 65 mm de la paroi périphérique (48).

**9.** Pompe centrifuge selon l'une des revendications 1 à 8, **caractérisée en ce que** les pièces de surface (60, 60a) présentent des longueurs différentes (h, $h_1$) en section transversale.

**10.** Pompe centrifuge selon la revendication 9, **caractérisée en ce que** les longueurs ($h_1$) en section transversale d'une pièce supérieure de surface (60a) par rapport à la longueur (h) en section transversale de la pièce inférieure de surface (60) sont dans le rapport d'environ 3 : 2 jusqu'à 3 : 2,5.

**11.** Pompe centrifuge selon l'une des revendications 1 à 10, **caractérisée en ce que** la largeur (a) de l'intervalle (70) d'entrée du pré-espace (72) correspond à environ un sixième de la longueur en section transversale ($h_1$) de la pièce supérieure de surface ou de la bande de matériau en barre (60h).

**12.** Pompe centrifuge selon au moins l'une des revendications 1 à 11, **caractérisée en ce que** la pièce de surface (60a) présentant la section transversale la plus longue est disposée la première selon le sens de rotation (x) de l'arbre de pompe (14) par rapport à la pièce de surface (60) présentant la longueur la plus courte en section transversale.

**13.** Pompe centrifuge selon la revendication 12, **caractérisée en ce que** la pièce de surface (60a) la plus longue en section transversale fait saillie dans un plan prolongeant la section transversale de l'autre pièce de surface (60).

**14.** Pompe centrifuge selon au moins l'une des revendications 1 à 13, **caractérisée en ce que** la section transversale du pré-espace (72) est relativement réduite par rapport à la section transversale de l'espace d'étanchéité (32).

**15.** Pompe centrifuge selon la revendication 14, **caractérisée en ce que** le rapport de la section transversale de l'espace d'étanchéité (32) par rapport à celle du pré-espace (72) est compris entre environ 12 : 1à 6 : 1, de préférence environ 10 : 1.

Fig.1

Fig. 2

Fig. 3

Fig. 4